# EUROPEAN PATENT APPLICATION

(11) **EP 1 119 120 A2**
(43) Date of publication of application: **25.07.2001**
(21) Application number: 00124920.0
(22) Date of filing: 15.11.2000
(51) Int. Cl.: H04H 1/00

(54) **Method and apparatus for distribution of multimedia data**

(30) Priority: 27.12.1999 US 472740
(71) Applicant: Alcatel Canada Inc., Kanata, Ontario K2K 2E6 (CA)
(72) Inventor: Bosloy, Jonathan, Kanata, Ontario K2W 1A1 (CA); Bhardway, Rajeev, Sunnyvale, California 94086 (US); Watt, James, Ottawa, Ontario K1S OB7 (CA); Murchison, Rod, Potomac Falls, Virginia 20165 (US)
(74) Representative: Fischer, Matthias, Dipl.-Ing.

(57) **Abstract**

A method and apparatus for digital multimedia distribution is presented. An intelligent edge block is utilized for the digital media distribution, where the edge block couples to the communication network that transports the data streams carrying the digital multimedia data. The intelligent edge block joins point-to-multipoint transmission groups and receives a plurality of the data streams in anticipation of the expected requirements of subscribers coupled to the edge block. Based on subscriber input relayed from subscribers coupled to the edge block, the edge block then provides the desired data streams to individual subscribers. The edge block may also maintain any bookkeeping information required to support the subscribers and perform the data distribution to the subscribers, which may include performing copying or multicast transmission support.

## Description

### Field of the Invention

The invention relates generally to data communication, and more particularly to a method and apparatus for distribution of broadcast digital media.

### Background of the Invention

As data communication systems continue to evolve, the bandwidth capabilities of such communications systems continue to increase. As such, applications that require large amounts of bandwidth become increasingly feasible. One such application is distribution of broadcast digital media services. Digital media services can include video information such as television programs or movies, audio programs, and textual and graphical information.

Typically, the various types of digital media that may be provided are sourced from one or more information sources. These information sources are intended to provide the multimedia programming to a large number of users that have access to the information via one or more communication networks. Numerous challenges are presented in determining which subscribers, or users, are to receive which information, and also how that information is to be relayed to the subscribers in an efficient manner.

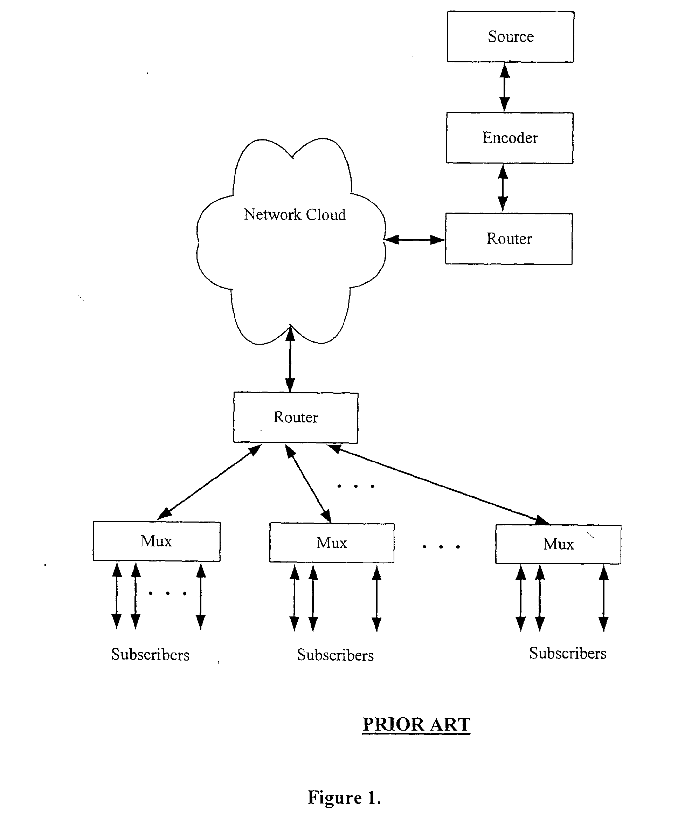

Figure 1 illustrates a prior art system that distributes digital multimedia to a plurality of subscribers. The information is provided by a source and encoded prior to being provided to a router that is coupled to a communication network. On the receiving end of the system, another router receives the information streams requested by particular subscribers and provides these streams to multiplexers (Mux) that pass the appropriate information to a subscriber. The multiplexers operate in a basic manner that includes little control other than gating the appropriate information such that it is presented to the appropriate subscriber.

The prior art system illustrated in Figure 1 is limited in its capabilities for efficiently managing large numbers of subscribers. The router on the receiving end (coupled to the multiplexers) must perform the functions of replicating data received over the network for delivery to multiple subscribers, handling the requests for particular information streams by the subscribers, managing the bookkeeping issues associated with monitoring and controlling subscriber activity, etc. As can be seen, multiple subscribers, possibly on the order of 60 or more, may be coupled to a single router on the receiving end.

In prior art systems each channel, or multimedia data stream, is typically carried through the network as a multicast group that includes a plurality of destinations. If the router supporting the subscribers is forced to join and leave multicast groups each time a subscriber switches channels, the overhead can be significant in terms of consuming system resources. All of the required overhead to join and leave various multicast groups within the system requires a large amount of control traffic that propagates through the entire system in order to effect the change. This propagation of control information can induce a large amount of latency into the system (i.e. a relatively long delay between selecting a new channel and being able to view it), which may be unacceptable in some applications.

In addition to potentially unacceptable latency, the system illustrated in Figure 1 is also limited in its expandability with respect to the number of subscribers that may be supported by a single router. Because the router must perform the majority of the dynamic activities with respect to the subscribers and interact with the network as well, the router can quickly be overwhelmed by numerous subscribers requiring a large amount of maintenance and control operations. Limitations in terms of expandability can therefore limit the feasibility of such systems in real-world applications.

Therefore, a need exists for a method and apparatus for providing digital multimedia distribution services in a manner that reduces latency and allows for expandability in terms of the number of subscribers, or users, which may be supported.

### Brief Description of the Drawings

Figure 1 illustrates a block diagram of a prior art digital media distribution system;
Figure 2 illustrates a block diagram of a digital media distribution system in accordance with a particular embodiment of the present invention;
Figure 3 illustrates a block diagram of a more detailed view of a particular edge block included in the system of Figure 2;
Figure 4 illustrates a block diagram of a distribution processor in accordance with a particular embodiment of the present invention;
Figure 5 illustrates a flow diagram of a method for controlling distribution of a plurality of data streams at an edge block coupled to a communication network in accordance with a particular embodiment of the present invention;
Figure 6 illustrates a block diagram of an ATM-based digital media distribution (DMDS) system in accordance with a particular embodiment of the present invention;
Figure 7 illustrates a block diagram of providing additional detail for a portion of the system illustrated in Figure 6; and
Figure 8 illustrates a block diagram of an IP-based DMDS system in accordance with a particular embodiment of the present invention.

### Detailed Description

Generally, the present invention provides a method and apparatus for digital multimedia distribution. An intelligent edge block is utilized for distribution of the digital multimedia data, where the edge block couples to a communication network that transports the data streams carrying the digital multimedia data. The intelligent edge block is or becomes a member of point-to-multipoint, multipoint-to-multipoint, or multicast groups and receives a plurality of the data streams in anticipation of the expected requirements of subscribers communicatively coupled to the edge block. Based on subscriber input relayed from subscribers coupled to the edge block, the edge block then provides the desired data streams to individual subscribers. The edge block may also maintain any bookkeeping information required to support the subscribers and perform the data distribution to the subscribers, which may include performing copying or multicast transmission support.

The intelligent edge block, which is capable of performing the channel switching, bookkeeping, and data distribution operations, enables simple expansion of the digital media distribution system. This is because additional edge blocks can simply be coupled to the communication network in order to support additional subscribers. The loading that additional edge blocks place on the system is minimal as the provision of the data streams to the various edge blocks is preferably accomplished using a point-to-multipoint distribution protocol. As such, additional edge blocks require minimal additional system resources.

In addition to providing expandability, inclusion of the intelligent edge blocks eliminates a large portion of the latency associated with prior art systems. Some latency is avoided as the edge block may already be receiving a data stream that an end user desires. Additional latency is avoided because each edge block performs the channel switching, billing, data distribution, and other subscriber support functions, and therefore the control traffic related to these functions need not propagate through the entire network. Reduction of the control traffic in the network also increases the efficiency with which the network can perform data distribution.

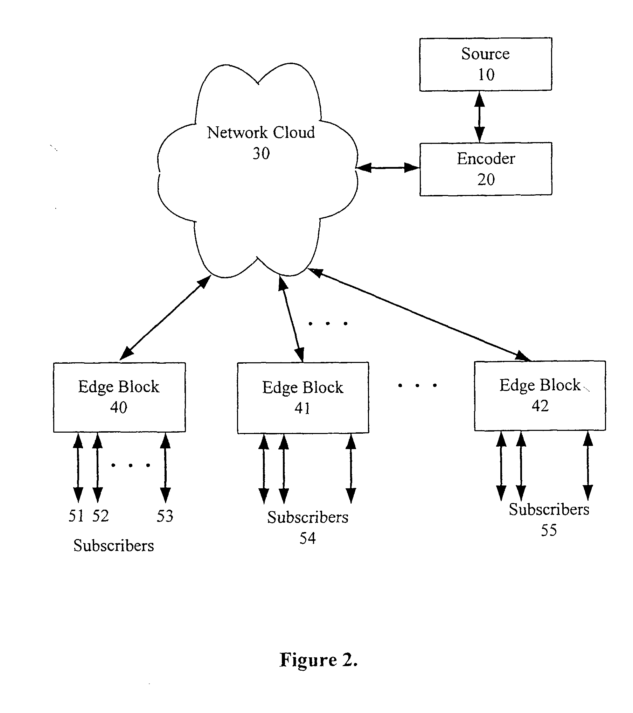

The invention can be better understood with reference to Figures 2-5. Figure 2 illustrates a block diagram of a digital multimedia distribution system. The system includes a source 10, an encoder 20, a network cloud 30, edge blocks 40-42, and a plurality of subscribers 51-55. The source 10 generates a plurality of data streams, where each of the data streams is preferably a data stream associated with some type of digital multimedia. Examples would include video programs such as television programs or movies, audio programs, and textual and graphical data streams such as stock tickers or textual news broadcasts. Other streams may be control streams such as electronic program guides or software updates that are provided to set-top boxes, home computers, or other endpoint devices. The source 10 may include a plurality of sources, where each source generates one or more of the plurality of data streams.

In one embodiment, the multiple sources may be used to generate various portions of a data stream. For example, a first source generates the audio and video data associated with a movie while a second source generates auxiliary information associated with the movie such as text or advertisement for web sites that sell merchandise related to the movie. The complete data stream would be a combination of the portions generated by each of the first and second sources. An end user could sort packets it receives corresponding to the complete data stream using a higher-level protocol such as TCP/IP. Typically, the packets for the complete data stream would be delivered to the same destination IP address, but on different ports corresponding to each of the first and second sources.

The encoder 20 formats the data streams for transmission. For example, an MPEG encoder may be used to encode video data streams corresponding to television programs. Once encoded, the data streams are passed to a communication network which is partially represented by the network cloud 30. Preferably, the data is passed to the network cloud 30 as Internet Protocol (IP) packets. The communication network, which includes the network cloud 30, provides a transmission medium for the plurality of data streams. Preferably, each of the plurality of data streams is distributed throughout the communication network using a point-to-multipoint transmission. Point-to-multipoint transmission is well known in the art and is understood to provide data from a single source to a plurality of destinations.

Each of the edge blocks 40-42 is coupled to the network cloud 30 and receives at least a portion of the plurality of data streams via the point-to-multipoint transmissions. Each edge block may operate autonomously from the other edge blocks in that it can determine for which of the data stream point-to-multipoint transmissions it is included as a destination. Thus, a large number of data streams, each representing a particular channel or programming option, are carried by the network cloud 30, and each edge block can determine which of these channels it receives.

Each of the edge blocks provides a rendezvous point for a plurality of subscribers. The rendezvous point is the point at which the subscribers perform their dynamic channel selecting operations. Thus, each of the edge blocks 40-42 provides a reservoir or set of potential data streams from which each of their respective subscribers can select specific data streams for receipt. Preferably, each edge block 40-42 will select the channels that it receives via the communication network based on its expectations of the needs of its respective subscribers.

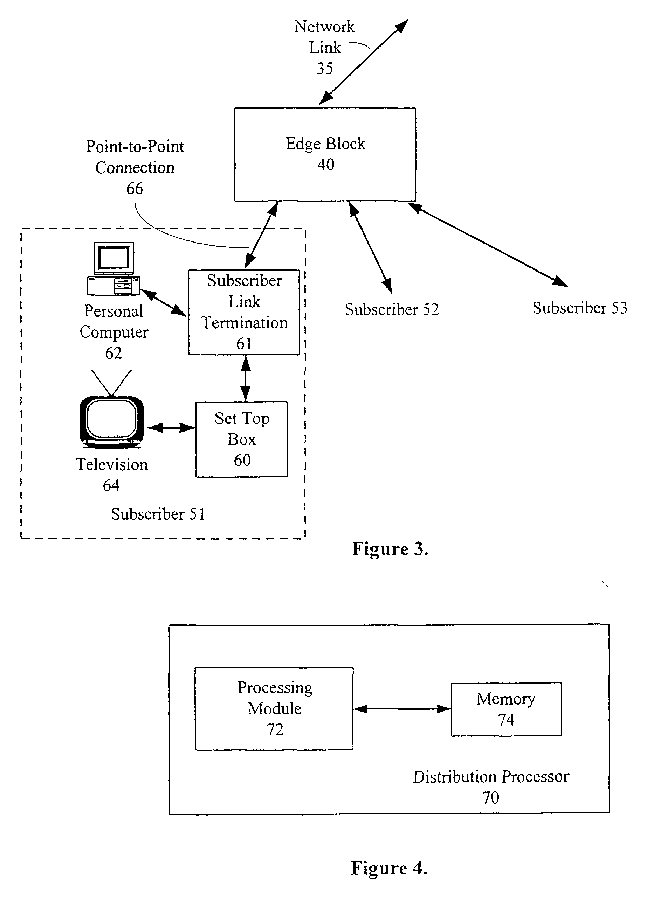

Figure 3 illustrates a particular edge block 40 and its respective subscribers 51-53 in additional detail. The ingress portion of the edge block 40 is coupled to a network link 35 such that it is capable of receiving a plurality of data streams via the communication network from at least one data stream source. An egress portion of the edge block 40 is adapted to couple (perhaps via intermediate devices not shown) to at least one subscriber, and preferably to a plurality of subscribers. Figure 3 illustrates three subscribers 51-53 coupled to the edge block 40, but it should be understood that many more subscribers may be supported by an edge block.

A control portion of the edge block, which is operably coupled to the ingress and egress portions, receives subscriber input from each of the subscribers and determines which of the plurality of data streams that had been received from the network are routed to each of the subscribers. In other words, each subscriber will relay information to the edge block 40 to determine which of the data streams that particular subscriber wishes to receive. Preferably, the coupling between the edge block 40 and each subscriber is accomplished via a point-to-point connection 66. The point-to-point connection 66 between the edge block 40 and each subscriber 51-53 is preferably a broadband interface that has adequate bandwidth for carrying the data streams associated with multimedia programming. Examples of such broadband interfaces include ADSL, VDSL, local multipoint data service (LMDS), ATM passive optical network (APON), and Ethernet.

In some embodiments, subscribers may communicate with the edge block 40 using Internet Group Management Protocol (IGMP), which is an IP protocol that allows subscribers (often referred to as hosts) to control their IP multicast group memberships to routers. The IGMP has been developed by the Internet Engineering Task Force (IETF) as a standard that relates to the communication between the router (edge block) and the subscriber. IETF specifications rfc1112 "Host Extensions for IP Multicasting" and rfc2236 "Internet Group Management Protocol, Version 2" describe the use of the current IGMP standard in detail.

Distribution of the data streams across the point-to-point connections may be accomplished using a multicast transmission scheme, where the multicast transmission scheme provides a particular data stream to multiple subscribers in an efficient manner. Multicast transmission schemes typically minimize the amount of copying required to distribute the data and also allow for more efficient overhead maintenance of the data transmission to multiple subscribers. In one example, multiple copies of portions of the data stream are not required, and a single copy is merely maintained and provided to each of the subscribers in the multi-cast transmission.

An example application in which the invention may be employed is illustrated with the additional detail provided for subscriber 51. Subscriber 51 is shown to include a subscriber link termination circuit 61, or similar receiving apparatus that establishes the point-to-point connection 66 with the edge block 40. The subscriber link termination circuit 61 receives the data streams desired by the subscriber 51. Preferably, the data streams received over the point-to-point connection 66 are structured as IP packets. The subscriber link termination circuit 61 can then provide the various data streams to various systems operated by the subscriber 51, such as a personal computer 62, a television set 64 via a set top box 60, or various other systems that could make use of the various types of digital multi-media data streams available. The subscriber link termination circuit 61 may be coupled to the set top box 60 and the personal computer via a local area network such as an Ethernet network. Note that, in other examples, a personal computer such as that illustrated may directly establish the connection with the edge block 40 for receipt of one or more data streams.

The edge block 40 preferably performs all of the channel switching for each of its respective subscribers in that it can alter the particular data streams being provided to a subscriber based on subscriber input. In addition to this function, the edge block 40 may also perform additional services such as maintaining billing information, determining subscriber access capabilities corresponding to one or more of the data streams (limited access to certain program channels for parental control, pay service, etc.), and monitoring subscriber history with regard to data stream selection. In monitoring the subscriber history with regard to data stream selection, the edge block 40 may maintain a time-stamped data base with respect to which data streams have been requested by, and provide to, a particular subscriber. As such, this history information can be used to analyze the viewing, listening, or reading habits of various subscribers with respect to the various channels available. As is apparent to one of ordinary skill in the art, such a database could easily be used to provide marketing information to advertisers, feedback to program developers, etc.

Returning to Figure 2, it should be noted that although the data streams are preferably provided to the network cloud 30 as IP packets and are preferably provided to the subscribers as 51-55 as IP packets, the protocol utilized to transmit the data streams across the network cloud 30 to the edge blocks 40-42 may vary significantly. In one embodiment, a packet-based communication network may be utilized within the network cloud 30. In another embodiment, a cell-based communication network, such as an asynchronous transfer mode (ATM) format communication network may be employed. In yet other embodiments, combinations of packet- and cell-based network components may be included within the network cloud 30.

Because the edge blocks 40-42 perform the channel selection, data distribution, and other maintenance tasks with respect to the subscribers 51-55, the control traffic associated with supporting these functions does not propagate through the network cloud 30 as it may have in prior art systems. This greatly reduces the latency associated with responding to a subscriber request. For example, in a prior art system, when a subscriber wished to change between channels, the router coupled to that subscriber would be required to join the point-to-multipoint transmission group for the channel desired by the subscriber while removing itself from the group associated with the previously received channel. Due to the latency associated with transmitting these requests through the network and then executing or operating upon the requests, a noticeable delay may have been perceived by the subscriber. In the system described herein, such control traffic need only propagate as far as the appropriate edge block for the subscriber's request to be serviced.

Additional benefit is realized because the edge block in the present system is not required to join and exit point-to-multipoint transmissions or groups each time a channel change occurs. This is because the edge block maintains a set of groups to which it subscribes, where the group is assumed to satisfy the needs of all of its subscribers. For example, if each of the subscribers has access to fifty channels of video information, the edge block 40 will receive all 50 data streams associated with these channels at all times, and merely provide data from the data streams to subscribers as requested.

In addition to the reduction in latency, another advantage of the system described herein is in the area of ease of scalability. Because each of the edge blocks is merely a destination with respect to point-to-multipoint transmissions, the overhead associated with including additional edge blocks within the system is minimal. Each edge block services a plurality of subscribers, and the overhead associated with servicing subscribers does not greatly affect the network cloud 30, or other parts of the system. As such, additional subscribers can be added without significantly effecting performance for other subscribers in the system.

In some embodiments, the edge blocks 40-42 may alter the set of data streams that they receive for distribution to subscribers. For example, if a number of subscribers request a particular channel that is not normally received by the edge block 40, the edge block 40 may modify the set of channels it carries to include the requested channel. Although this involves some control traffic within the network in order to join the group of destinations for the point-to-multipoint transmission associated with the new channel, the control traffic is still significantly less than that required in prior art systems. It should be apparent to one of ordinary skill in the art that numerous additional factors could influence the set of channels carried by a particular edge block at any point in time. Examples would include subscriber classification (an edge block servicing a hotel would include a local tourist channel in its set of channels supported), temporal parameters, policy information, geographic location, initialization parameters, etc.

Another advantage provided by the system is in the elimination of fraud issues with respect to pay channels or similar programming. Because the edge block is outside of the control of the end subscriber, and the edge block is the entity that performs the allocation of programming information to subscribers, some fraud issues associated with prior art systems where subscribers could tamper with set-top boxes or control relaying of billing information back to the data provider are avoided. In addition to this, a particular subscriber's access to various channels or features may be modified without the need for a subscriber site visit by the service provider.

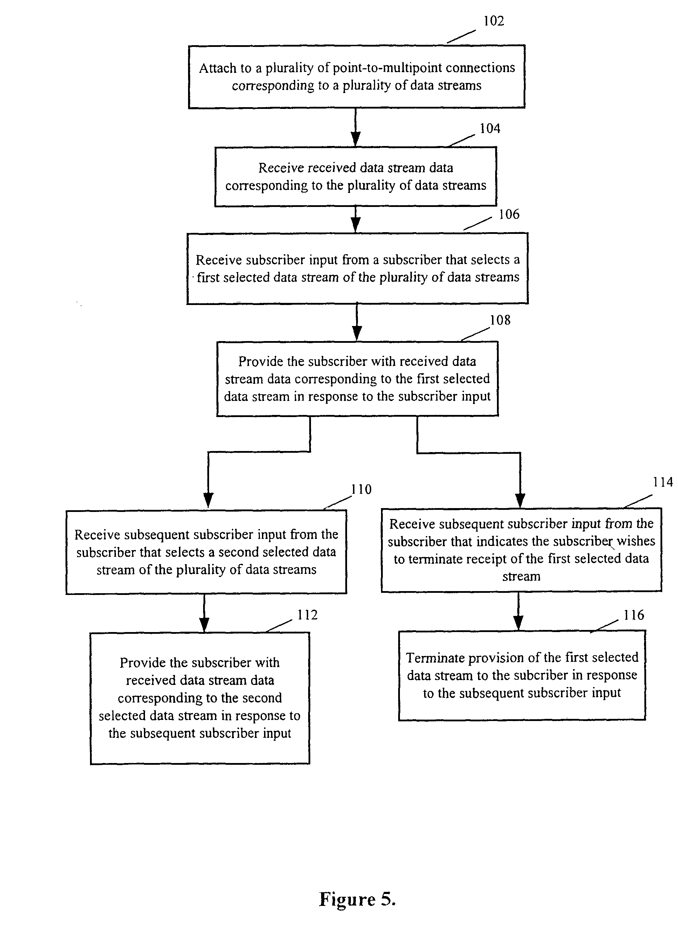

Figure 4 illustrates a distribution processor 70 that may be used in an edge block for performing the method illustrated in Figure 5. The distribution processor 70 includes a processing module 72 and memory 74. The processing module 72 may be a single processing device or a plurality of processing devices. Such a processing device may be a microprocessor, microcontroller, digital signal processor, microcomputer, state machine, logic circuitry, or any device that processes information based on operational or programming instructions. The memory 74 may be a single memory device or a plurality of memory devices. Such a memory device may be a read-only memory device, random access memory device, floppy disk, hard drive memory, or any device that stores digital information. Note that when the processing module 72 has one or more of its functions performed by a state machine or logic circuitry, the memory containing the corresponding operational instructions is embedded within the state machine or logic circuitry.

The memory 74 stores programming or operational instructions that, when executed by the processing module 72, cause the processing module 72 to perform at least a portion of the steps of the method illustrated in Figure 5. Note that the distribution processor 70 may implement some of the functions of the method through software stored in the memory 74, whereas other portions of the method may be implemented using hardware or circuitry included within the distribution processor 70. Thus, in some embodiments, a mix of hardware and software may be used to perform the method illustrated in Figure 5.

Figure 5 illustrates a flow diagram of a method for controlling distribution of a plurality of data streams at an edge block coupled to a communications network. The method preferably includes the distribution of a plurality of digital multimedia data streams to a plurality of subscribers via the communication network. The method begins at step 102 where a plurality of point-to-multipoint connections are attached, where the point-to-multipoint connections correspond to a plurality of data streams to be used for distribution to a particular set of subscribers coupled to the edge block. Attaching to a point-to-point connection involves including an edge block as a destination for a particular point-to-multipoint connection. As such, the edge block will, at step 104, receive received data stream data corresponding to the plurality of data streams to be made available to the set of subscribers coupled to that particular edge block. The data stream data is received via the point-to-multipoint connections over the communications network.

At step 106, subscriber input is received from one of the subscribers of a plurality of subscribers associated with the particular edge block. The subscriber input received selects a first selected data stream of the plurality of data streams. The subscriber input received at step 106 may be input that includes a request for a particular programming channel distributed through the multimedia distribution system in which the method is employed.

At step 108, the received data stream data corresponding to the first selected data stream that has been selected by the subscriber is provided to the subscriber in response to the subscriber input. If the subscriber has selected a particular channel, the data stream associated with that channel is provided to the subscriber subsequent to receipt of the subscriber input requesting that particular channel. Note that this is accomplished without any additional interaction with other portions of the general distribution network over which the data streams are transmitted from the source(s), and the channel changing is performed wholly within the edge block. Preferably, the received data stream data is provided to the subscriber as IP packets over a point-to-point connection as described earlier. Such a point-to-point connection may be supplied with data via a multicast transmission such that the overhead associated with supporting multiple subscribers is minimized.

At step 110, subsequent subscriber input is received from the subscriber selecting a second selected data stream from the plurality of data streams supported by the edge block. As such, at step 112, the subscriber is provided with received data stream data corresponding to the second selected data stream in response to the subsequent subscriber input. Once again, the channel changing performed by the subscriber is performed wholly within the edge block, thus, reducing latency associated with propagation of control signals in prior art systems. Note that if the point-to-point connection between the subscriber and the edge block has adequate bandwidth for carrying multiple channels, both the first and second selected data streams may be provided to the subscriber concurrently. If the connection can only support one of the two selected data streams, provision of the first selected data stream to the subscriber may be terminated when the channel change occurs.

Additionally, a subscriber may explicitly terminate receipt of a particular data stream as is illustrated in steps 114 and 116. At step 114, subsequent subscriber input is received indicating that the subscriber wished to terminate receipt of the first selected data stream. In response to this request, which may be an IGMP group leave request in some embodiments, the edge block terminates provision of the first selected data stream to the subscriber at step 116.

Because the method of Figure 5 is used to provide the particular programming information to the various subscribers being supported, the method may also maintain history data relating to the data stream selected by each of the subscribers supported by the edge block. As described earlier, such history data may be maintained in a time-stamped format such that the program information received by the various subscribers may be accurately determined.

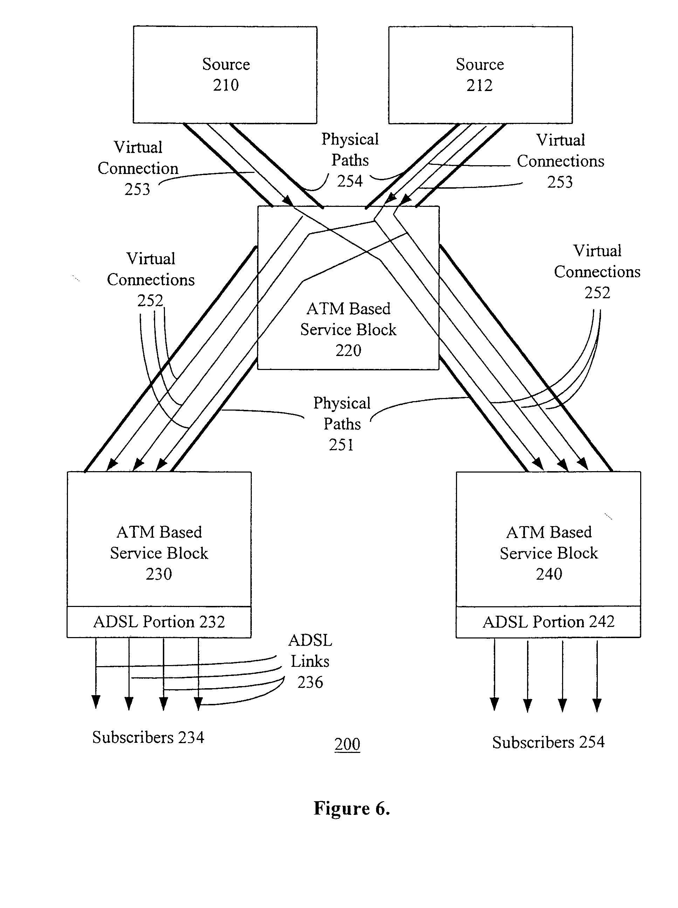

Figure 6 illustrates a simplified example embodiment of a digital media distribution (DMDS) system 200 in which ATM devices are used to support broadcast of multimedia content. The system 200 includes sources 210 and 212 that provide a plurality of data streams that may carry multimedia data. The sources 210 and 212 are linked to an ATM based service block 220 via physical paths 254. The ATM based service block 220 may be a communications network implemented with, for example, one or more Newbridge MainStreetXpress® 36170 multiservices switches, and examples of the physical paths 254 are concatenations of OC-3, OC-12, STM-1, and STM-4 links or combinations thereof through the network. The data streams are transported over the physical paths 254 to the ATM based service block 220 via virtual connections 253 established between the sources 210, 212 and the ATM based service block 220. The virtual connections 253 may be point-to-multipoint links. Because ATM networks can replicate cell flow corresponding to the data streams very efficiently in such point-to-multipoint configurations, data transmission using the ATM-based components to a plurality of end users can be performed with corresponding efficiency.

The ATM based service block 220 is operably coupled to additional ATM based service blocks 230 and 240 (edge blocks) via physical paths 251 over which a number of virtual connections may be supported. The virtual connections may be permanent virtual connections (PVCs), soft permanent virtual connections (SPVCs), or switched virtual connections (SVCs). The ATM based service block 220 establishes a point-to-multipoint link for each of the data streams requested by the ATM based service blocks 230 and 240 such that the data streams received from the sources 210 and 212 are duplicated in the ATM based service block 220 and delivered to the edge blocks 230 and 240 via the virtual connections 252.

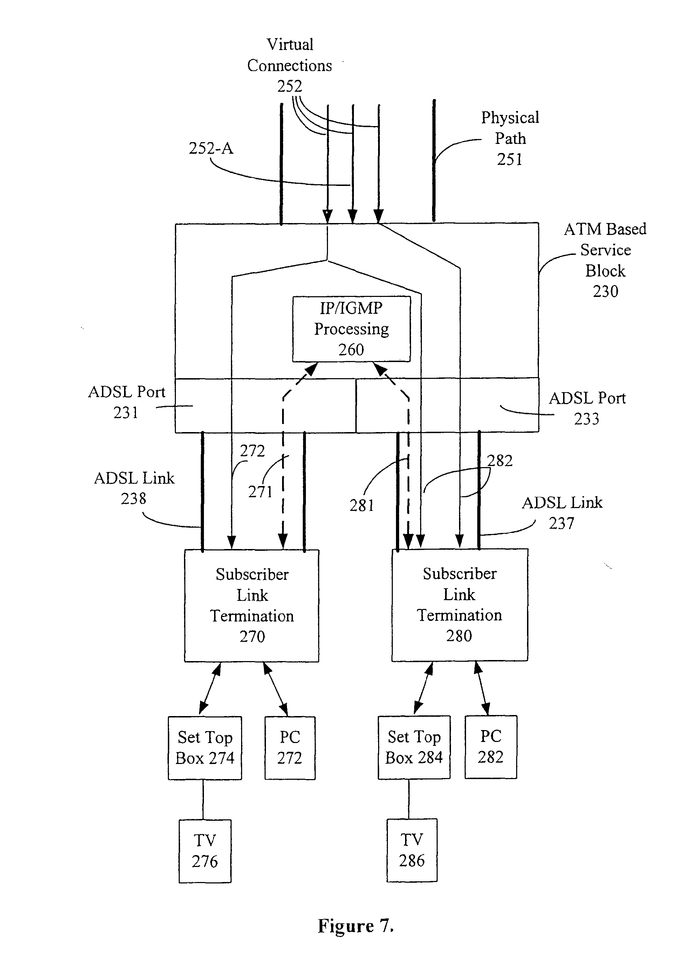

The edge blocks 220 and 230 may be multiservice platforms that include support of ADSL or similar point-to-point protocols for further distribution of the data streams to subscribers. The edge block 230 includes an ADSL portion 232 that provides individual ADSL links 236 to the subscribers 234 for such data stream distribution. The edge block 240 includes a similar ADSL portion 242 for supporting subscribers 254. Additional detail for the edge block (ATM service block) 230 and its connections is illustrated in Figure 7.

In order to determine which data streams should be provided to individual subscribers included in the set of subscribers 234, the edge block 230 may support IGMP messaging. Thus, each of the ADSL links 237 and 238 from the ADSL ports 233 and 231 to subscriber link terminations 280 and 270, respectively, may include an Internet Protocol (IP) channel 271 and 281 (virtual connections) over which IP messages, such as IGMP signaling messages, are transferred. One or more bearer channels 272 and 282 (virtual connections) are also included in the ADSL links 237 and 238 to the subscribers. The bearer channels constitute leaves which may be joined to or removed from respective point-to-multipoint connections established within the edge block 230 for each of the virtual connections 252 received over physical path 251, in response to subscriber requests, such that the data for selected data streams is delivered from the corresponding virtual connections 252 through the edge block 230 to the subscribers 234 in an efficient manner. As is illustrated, the subscriber link 270 provides data received in the multimedia data streams to a set top box 274, which is coupled to television (TV) 276, and to personal computer (PC) 272. The subscriber link 280 provides data received in the multimedia data streams to a set top box 284, which is coupled to TV 286, and to PC 282.

The edge block 230 may subscribe to a certain set of data streams at all times such that, even if none of the subscribers 234 have requested a particular data stream, it is readily available. For instance, in Figure 7, virtual connection 252-A represents a data stream which is being received by the edge block (ATM service block) 230 but is not currently being delivered to any of its subscribers. If a subscriber sends a subsequent IGMP join group request that indicates a desire to receive a particular data stream, the edge block 230 may simply set up a virtual connection between the entry point of the data stream to the edge block and the subscriber. The entry point of the data stream to the edge block 230 which may be identified using parameters such as shelf, slot, port, virtual path identifier, and virtual connection identifier corresponding to the virtual connection over which the data stream is received by the edge block 230.

If other subscribers are currently receiving the desired data stream, the data may be provided to the joining subscriber by adding a new leaf to a point-to-multipoint link within the edge block 230. This point-to-multipoint connection would be between the entry point of the virtual connection carrying the data stream and the leaves corresponding to the subscribers that are currently receiving the data stream.

Note that any subscriber may terminate receipt of a data stream by issuing an IGMP group leave request to the edge block 230. In order to process the IGMP traffic, the edge block 230 preferably includes circuitry capable of such IGMP processing 260, where the circuitry is capable of reconfiguring the various virtual connections corresponding to data stream traffic in response to the IGMP messages from the subscribers 234.

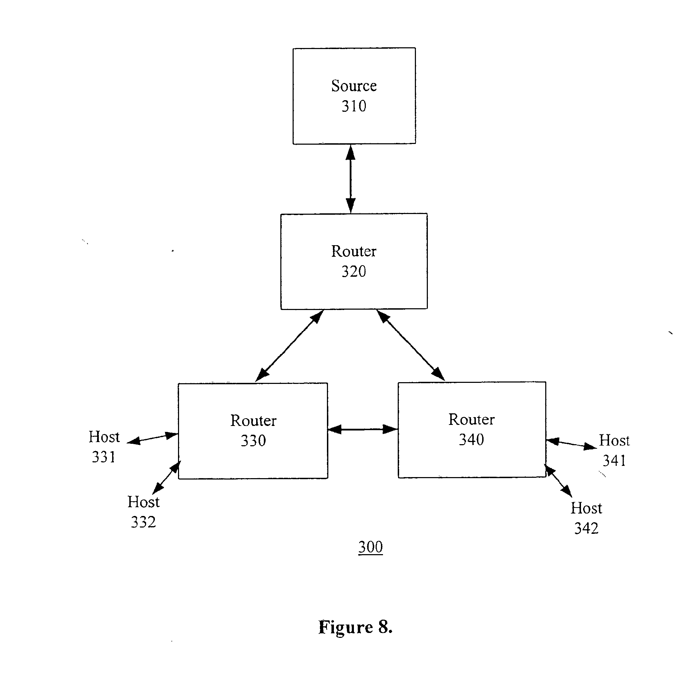

Figure 8 illustrates another example embodiment in which an IP network 300 is used to support DMDS. In order to provide such support, the functionality of the routers 320, 330, and 340 is significantly different than conventional router functionality in prior art IP networks. The network 300 includes at least one source 310 that provides data streams corresponding to multimedia channels or other DMDS data streams to the router 320. The routers 320, 330, 340 are intercoupled, and each may transmit/receive data to/from other routers using IP protocol. The IP protocol used between two routers may be the Distance Vector Multicasting Routing Protocol (DVMRP), which is a multicasting protocol that is detailed in IETF specification rfc-1075.

Routers 330 and 340 are coupled to hosts 331-332, and 341-342, respectively. The hosts 331-332 and 341-342 are DMDS subscribers, and host is a common term used in describing IGMP protocol interactions. Because they couple to the subscribers, the routers 330 and 340 may be referred to as edge blocks, or edge routers. Each of the routers 330 and 340 may communicate with its respective set of hosts 331-332 and 341-342 using the IGMP protocol. Hosts provide information using IGMP messages to the edge routers 330 and 340 such that edge routers 330 and 340 provide the appropriate data streams to each of the hosts 331-332 and 341-342.

Because an edge router is typically coupled to a large number of subscribers, or hosts, and wishes to ensure that the needs of the subscriber can be met with little delay, the edge routers may join a number of multicast groups in anticipation of the needs of the subscribers. Thus, when a subscriber wishes to begin receiving the data stream corresponding to one of those groups, the control traffic required to deliver the group to the subscriber is only between the subscriber and the edge router. No additional control traffic through the router 320 is required as the data stream for the multicast group is already being received by the edge router 330. If a subscriber sends an indication that it wishes to terminate receipt of a data stream corresponding to the group, the edge router may simply terminate the provision of the data stream to that subscriber while continuing to receive the data stream itself.

The systems and methods described herein illustrate a technique for providing digital multimedia distribution services (DMDS) to a plurality of subscribers in a manner that effectively separates the multimedia data transmission from the control information associated with subscriber support. By moving the subscriber support functions to peripheral blocks on the edges of the communication network, the control information associated with the subscriber support does not affect network performance. As such, latency issues are minimized and expandability of the system is preserved. Advantages over other prior art systems such as cable television are also realized in that billing and program selection or accessibility operations are performed external to the end user's control. As such, fraud issues that may have existed in prior art systems where the users had access to programming circuitry or billing systems are eliminated.

It should be understood that the implementation of variations and modifications of the invention in its various aspects should be apparent to those of ordinary skill in the art, and that the invention is not limited to the specific embodiments described. It is therefore contemplated to cover by the present invention any and all modifications, variations, or equivalents that fall within the spirit and scope of the basic underlying principles disclosed and claimed herein.

## Claims

1. An edge block for use in a multicast communication system, comprising:
an ingress portion adapted to couple to a communication network, wherein the ingress portion receives a plurality of data streams via the communication network from at least one data stream source;
an egress portion adapted to couple to a subscriber, wherein the egress portion provides at least one selected data stream of the plurality of data streams to the subscriber; and
a control portion operably coupled to the ingress portion and the egress portion, wherein the control portion receives subscriber input from the subscriber, wherein the control portion determines the at least one selected data stream based on the subscriber input.

2. The edge block of claim 1, wherein the egress portion is adapted to couple to a plurality of subscribers, wherein the control portion determines which data streams are provided to each of the plurality of subscribers based on corresponding subscriber input received from each of the plurality of subscribers.

3. The edge block of claim 2, wherein the control portion further includes circuitry that duplicates data included in the plurality of data streams for distribution to the plurality of subscribers.

4. The edge block of claim 2, wherein the control portion further includes circuitry that monitors subscriber history with regard to data stream selection.

5. The edge block of claim 2, wherein the control portion further includes circuitry that maintains subscriber billing information.

6. The edge block of claim 2, wherein the control portion further includes circuitry that determining subscriber access capabilities corresponding to at least a portion of the plurality of data streams.

7. The edge block of claim 2, wherein the plurality of data streams correspond to a plurality of channels of multimedia, wherein information included in the plurality of channels includes at least one of video information, audio information, and textual information.

8. The edge block of claim 2, wherein the communication network uses asynchronous transfer mode (ATM) circuitry to transmit the data plurality of data streams.

9. The edge block of claim 2, wherein the communication network uses internet protocol (IP) to transmit the plurality of data streams.

10. The edge block of claim 2, wherein the subscriber input is communicated via Internet Group Management Protocol (IGMP) communications.

11. The edge block of claim 2, wherein the egress portion of the edge block supports asynchronous digital subscriber line (ADSL) links to the plurality of subscribers.

12. A data stream distribution system, comprising:
a data stream source, wherein the data stream source generates a plurality of data streams;
a communication network operably coupled to the data stream source, wherein the communication network provides a transmission medium for the plurality of data streams; and
an edge block operably coupled to the communication network, wherein the edge block receives at least a portion of the plurality of data streams, wherein the edge block is adapted to couple to a plurality of subscribers via a plurality of point-to-point connections, wherein the edge block controls distribution of selected data streams of the portion of the plurality of data streams to the plurality of subscribers via the plurality of point-to-point connections.

13. The data stream distribution system of claim 12, wherein each data stream is received by the edge block as part of a point-to-multi-point transmission.

14. The data stream distribution system of claim 12, wherein each data stream is received by the edge block as part of a multicast transmission.

15. The data stream distribution system of claim 12, wherein the edge block receives subscriber input from a first subscriber of the plurality of subscribers, wherein the edge block determines which data streams are provided to the first subscriber based on the subscriber input.

16. The data stream distribution system of claim 15, wherein the subscriber input includes Internet Group Management Protocol (IGMP) communications.

17. The data stream distribution system of claim 12, wherein the edge block duplicates data stream data for distribution to subscribers.

18. The data stream distribution system of claim 12, wherein the edge block monitors subscriber history with regard to data stream selection.

19. The data stream distribution system of claim 12, wherein the edge block maintains subscriber billing information.

20. The data stream distribution system of claim 12, wherein the edge block determines subscriber access capabilities corresponding to at least a portion of the plurality of data streams.

21. The data stream distribution system of claim 12, wherein the edge block maintains time-stamped history information corresponding to a subscriber, wherein the time-stamped history information includes time-stamped data stream selections for the subscriber.

22. The data stream distribution system of claim 12, wherein the plurality of data streams are provided as streams of internet protocol packets by the data stream source to the communication network.

23. The data stream distribution system of claim 12, wherein the plurality of data streams are multimedia data streams that include at least one of: of video information, audio information, and textual information.

24. The data stream distribution system of claim 12, wherein the communication network is a packet based network.

25. The data stream distribution system of claim 12, wherein the communication network is a cell based network.

26. The data stream distribution system of claim 25, wherein the communication network is an asynchronous transfer mode (ATM) network.

27. The data stream distribution system of claim 12, wherein the edge block is further adapted to couple to each of the plurality of subscribers via an internet protocol format point-to-point connection.

28. The data stream distribution system of claim 12, wherein the data stream source further comprises a plurality of data stream sources operably coupled to the communication network, wherein each of the plurality of data stream sources provides a portion of the plurality of data streams.

29. The data stream distribution system of claim 12 further comprises a plurality of edge blocks operably coupled to the communication network, wherein each of the plurality of edge blocks is adapted to couple to a corresponding plurality of subscribers, wherein each edge block of the plurality of edge blocks determines a corresponding portion of the plurality of data stream that is received by the edge block for distribution to the corresponding plurality of subscribers for the edge block.

30. The data stream distribution system of claim 12, wherein the edge block determines which data streams are included in the at least a portion of the plurality of data streams that are received by the edge block based on at least one of: subscriber input, temporal parameters, policy information, subscriber classification, and initialization parameters.

31. A method for controlling distribution of a plurality of data streams at an edge block coupled to a communication network, comprising:
attaching to a plurality of point-to-multipoint connections corresponding to the plurality of data streams, wherein data stream data is transferred over the point-to-multipoint connections using the communication network;
receiving received data stream data corresponding to the plurality of data streams;
receiving subscriber input from a subscriber of a plurality of subscribers, wherein the subscriber input selects a first selected data stream of the plurality of data streams;
providing the subscriber with received data stream data corresponding to the first selected data stream in response to the subscriber input;
receiving subsequent subscriber input from the subscriber, wherein the subsequent subscriber input selects a second selected data stream of the plurality of data streams; and
providing the subscriber with received data stream data corresponding to the second selected data stream in response to the subsequent subscriber input.

32. The method of claim 31 further comprises maintaining history data relating to data streams selected by the plurality of subscribers.

33. The method of claim 31 wherein received data stream data is provided to the subscriber as internet protocol packets.

34. The method of claim 31 wherein received data stream data is provided to the subscriber via a point-to-point connection.

35. The method of claim 31, wherein providing received data stream data to the subscriber further comprises providing received data stream data to the subscriber via a multicast transmission.

36. A data stream distribution processor for controlling distribution of a plurality of data streams at an edge block coupled to a communication network, comprising:
a processing module; and
memory operably coupled to the processing module, wherein the memory stores operational instructions that, when executed by the processing module, cause the processing module to perform functions that include:
attaching to a plurality of point-to-multipoint connections corresponding to the plurality of data streams, wherein data stream data is transferred over the point-to-multipoint connections using the communication network;
receiving received data stream data corresponding to the plurality of data streams;
receiving subscriber input from a subscriber of a plurality of subscribers, wherein the subscriber input selects a first selected data stream of the plurality of data streams;
providing the subscriber with received data stream data corresponding to the first selected data stream in response to the subscriber input;
receiving subsequent subscriber input from the subscriber, wherein the subsequent subscriber input selects a second selected data stream of the plurality of data streams; and
providing the subscriber with received data stream data corresponding to the second selected data stream in response to the subsequent subscriber input.

37. The processor of claim 36, wherein the memory further comprises instructions that, when executed by the processing module, cause the processing module to maintaining history data relating to data streams selected by the plurality of subscribers.

38. An asynchronous transfer mode (ATM) switch for use substantially at the edge of a network, comprising::
an ingress portion adapted to couple to a remaining portion of the network, wherein the ingress portion receives a plurality of data streams via the network from at least one data stream source;
an egress portion adapted to couple to a subscriber, wherein the egress portion provides at least one selected data stream of the plurality of data streams to the subscriber; and
a control portion operably coupled to the ingress portion and the egress portion, wherein the control portion receives subscriber input from the subscriber, wherein the control portion determines the at least one selected data stream based on the subscriber input.

39. The ATM switch of claim 38, wherein the egress portion is adapted to couple to a plurality of subscribers, wherein the control portion determines which data streams are provided to each of the plurality of subscribers based on corresponding subscriber input received from each of the plurality of subscribers.

40. The ATM switch of claim 39, wherein the control portion processes internet group management protocol (IGMP) messages.

41. The ATM switch of claim 40, wherein the egress portion of the ATM switch supports asynchronous digital subscriber line (ADSL) links to the plurality of subscribers

42. A router for use substantially at the edge of a network, comprising::
an ingress portion adapted to couple to a remaining portion of the network, wherein the ingress portion receives a plurality of data streams via the network from at least one data stream source;
an egress portion adapted to couple to a subscriber, wherein the egress portion provides at least one selected data stream of the plurality of data streams to the subscriber; and
a control portion operably coupled to the ingress portion and the egress portion, wherein the control portion receives subscriber input from the subscriber, wherein the control portion determines the at least one selected data stream based on the subscriber input.

43. The router of claim 42, wherein the egress portion is adapted to couple to a plurality of subscribers, wherein the control portion determines which data streams are provided to each of the plurality of subscribers based on corresponding subscriber input received from each of the plurality of subscribers.

44. The router of claim 43, wherein the control portion processes internet group management protocol (IGMP) messages.

45. The router of claim 42, wherein the at least one selected data stream is provided to the subscriber via a plurality of internet protocol (IP) packets.
